# EUROPÄISCHE PATENTANMELDUNG

(11) **EP 4 800 429 A1**
(43) Veröffentlichungstag der Anmeldung: **02.09.2026**
(21) Anmeldenummer: 25160542.4
(22) Anmeldetag: 27.02.2025
(51) Int. Cl.: G01S 7/40, G09B 9/00, G09B 9/54, G01S 7/41, G01S 7/48, G01S 13/86, G01S 13/931, G01S 15/931

(54) **TRAINIEREN EINES NEURONALEN NETZWERKS AUF DIE ERZEUGUNG NEUER BEOBACHTUNGEN EINER SZENERIE**

(71) Anmelder: Robert Bosch GmbH, 70442 Stuttgart (DE)
(72) Erfinder: Tatarchenko, Maxim, 13059 Berlin (DE); Kall, Jochen, 31137 Hildesheim (DE); Mummadi, Chaithanya Kumar, Coraopolis, PA, 15108 (US); Schreiber, Marcel, 89231 Neu-Ulm (DE); Miller, John, Pittsburgh, PA, 15217 (US); Abdulatif, Sherif, 70191 Stuttgart (DE); Vertens, Johan, 72250 Freudenstadt (DE); John, Dalina, 31199 Diekholzen (DE)

(57) **Zusammenfassung**

Verfahren (100) zum Trainieren eines neuronalen Netzwerks (2), das eine oder mehrere Kenngrößen (3) einer vorgegebenen Szenerie (1) vorhersagt, mit den Schritten:
• es wird eine Menge von Trainings-Beispielen (6) bereitgestellt (110), die jeweils mindestens Kombinationen aus Messorten (4) einerseits und Referenz-Beobachtungen (4a) der Szenerie (1) andererseits enthalten;
• für jedes Trainings-Beispiel (6) wird der jeweilige Messort (4) dem neuronalen Netzwerk (2) zugeführt (120);
• die so erhaltenen Kenngrößen (3) werden mit einem vorgegebenen Rendering-Modell (7) in eine unter idealisierten Bedingungen ausgehend vom jeweiligen Messort (4) zu erwartende Ideal-Beobachtung (4a*) der Szenerie (1) übersetzt (130);
• die Ideal-Beobachtung (4a*) wird mit einem Messmodell (8) in eine unter realistischen Bedingungen ausgehend vom jeweiligen Messort (4) zu erwartende Real-Beobachtung (4a**) der Szenerie (1) übersetzt (140);
• die Real-Beobachtungen (4a**) werden mit den Referenz-Beobachtungen (4a) für das jeweilige Trainings-Beispiel (6) verglichen (150);
• eine bei diesem Vergleich festgestellte Abweichung (Δ) wird mit einer vorgegebenen Kostenfunktion (9) bewertet (160); und
• Parameter (2a), die das Verhalten des neuronalen Netzwerks (2) charakterisieren, werden auf das Ziel optimiert (170), bei weiterer Verarbeitung von Trainings-Beispielen (6) die Bewertung (9a) durch die Kostenfunktion (9) zu verbessern.

## Beschreibung

Die vorliegende Erfindung betrifft das Training neuronaler Netzwerke für die Generierung synthetischer Messdaten zu einer vorgegebenen Szenerie. Diese synthetischen Messdaten können beispielsweise zur Datenaugmentierung beim Training weiterer neuronaler Netzwerke im Hinblick auf bestimmte Aufgaben (Tasks) verwendet werden.

### Stand der Technik

Das zumindest teilweise automatisierte Führen von Fahrzeugen oder Robotern auf einem Betriebsgelände oder gar im öffentlichen Straßenverkehr erfordert eine ständige Überwachung des Umfelds des Fahrzeugs bzw. Roboters. Für diese Überwachung kommen neben Kameras insbesondere auch Radar- und Lidar-Sensoren zum Einsatz. Die Auswertung der Messdaten erfolgt insbesondere beispielsweise mit neuronalen Netzwerken.

Derartige neuronale Netzwerke werden mit einer Vielzahl von Beispielen für Messdaten trainiert. Es wird dann erwartet, dass sie dann auch in weiteren Fällen, die nicht im Training gesehen wurden, brauchbare Resultate liefern ("generalisieren"). Sowohl für das Training derartiger Systeme als auch für den Ende-zu-Ende Test der Verarbeitungskette von den Messdaten bis hin zur ausgeführten Aktion des Fahrzeugs bzw. Roboters werden Messdaten in großer Menge und mit großer Variabilität benötigt.

Hierfür ist es wünschenswert, physikalisch aufgenommene Messdaten einer vorgegebenen Szenerie mit synthetisch erzeugten Messdaten anzureichern.

### Offenbarung der Erfindung

Die Erfindung stellt ein Verfahren zum Trainieren eines neuronalen Netzwerks bereit, das dazu eingerichtet ist, eine oder mehrere Kenngrößen einer vorgegebenen Szenerie vorherzusagen, die sich auf von einem vorgegebenen Messort beobachtbare Orte beziehen.

Im Rahmen dieses Verfahrens wird eine Menge von Trainings-Beispielen bereitgestellt, die jeweils mindestens Kombinationen aus Messorten einerseits und Referenz-Beobachtungen der Szenerie, die sich auf diese Messorte beziehen, andererseits enthalten. Bei diesen Referenz-Beobachtungen kann es sich insbesondere beispielsweise um tatsächlich vorgenommene Beobachtungen handeln, oder auch beispielsweise um simulierte Beobachtungen. Beispielsweise können Radar-Messungen und Lidar-Messungen gut simuliert werden, da sich die entsprechende Abfragestrahlung geradlinig ausbreitet und ihre Interaktion mit Objekten in der Szenerie geometrisch berechnet werden kann. Aber auch die Ausbreitung von Licht, aus dem optische Bilder generiert werden, lässt sich gut simulieren, wie etwa mit Raytracing.

In einem einfachen Anwendungsbeispiel umfassen die Trainings-Beispiele Bilder der Szenerie, die ausgehend von dem jeweiligen Messort aufgenommen wurden. Die vom neuronalen Netzwerk vorhergesagten Kenngrößen können dann beispielsweise die lokale Farbe und Deckkraft von Orten in der Szenerie, etwa auf der Oberfläche von Objekten, beinhalten. Aus der Verteilung dieser lokalen Kenngrößen kann dann beispielsweise ein neues Bild der Szenerie aus einer anderen Perspektive berechnet werden.

Für jedes Trainings-Beispiel wird der jeweilige Messort dem zu trainierenden neuronalen Netzwerk zugeführt. Daraufhin liefert das neuronale Netzwerk eine Vorhersage für die eine oder mehreren Kenngrößen.

Die so erhaltenen Kenngrößen werden mit einem vorgegebenen Rendering-Modell in eine unter idealisierten Bedingungen ausgehend vom jeweiligen Messort zu erwartende Ideal-Beobachtung der Szenerie übersetzt.

So kann beispielsweise ein geometrisches Rendering-Modell verwendet werden, um aus ortsabhängigen Verteilungen von Farbe und Deckkraft in einer Szenerie ein Bild dieser Szenerie zu berechnen, das ausgehend von einem beliebigen Messort unter einer beliebigen Blickrichtung von der gleichen Szenerie aufgenommen wurde. Dies ist dann das Bild, das ein perfektes Abbildungssystem liefern würde.

Ein solches perfektes Abbildungssystem gibt es jedoch nicht. Vielmehr wird jedes reale Abbildungssystem an Stelle der Ideal-Beobachtung eine Real-Beobachtung liefern, die durch einen wie auch immer gearteten, in dem realen Abbildungssystem stattfindenden Prozess geprägt wird. Dies betrifft auch dasjenige Abbildungssystem, mit dem die Referenz-Beobachtungen in den Trainings-Beispielen erfasst wurden. Den Trainingserfolg des neuronalen Netzwerks an einem Vergleich eines unter Heranziehung der Vorhersagen des neuronalen Netzwerks erhaltenen idealen Bildes einerseits und eines real aufgenommenen Bildes andererseits zu messen würde somit bedeuten, beim Training einer nicht erreichbaren Idealvorstellung nachzujagen. Es ist nicht garantiert, dass das, was man bei einer solchen Jagd realistischerweise bekommen kann, auch unter den vorgegebenen realen Umständen, die von der Idealvorstellung deutlich abweichen, noch ein Optimum ist. Es ist besser, von vornherein das Ziel an das Erreichbare anzupassen.

Daher wird die Ideal-Beobachtung wird mit einem Messmodell in eine unter realistischen Bedingungen ausgehend vom jeweiligen Messort zu erwartende Real-Beobachtung der Szenerie übersetzt. Das Messmodell repräsentiert einen Prozess, mit dem die Referenz-Beobachtungen in den Trainings-Beispielen erhalten wurden. Diese Real-Beobachtungen werden dann mit den Referenz-Beobachtungen für das jeweilige Trainings-Beispiel verglichen.

Eine bei diesem Vergleich festgestellte Abweichung wird mit einer vorgegebenen Kostenfunktion bewertet. Parameter, die das Verhalten des neuronalen Netzwerks charakterisieren, werden auf das Ziel optimiert, bei weiterer Verarbeitung von Trainings-Beispielen die Bewertung durch die Kostenfunktion zu verbessern.

Es wurde erkannt, dass durch die besagte Anpassung des Ziels an das tatsächlich Erreichbare das Training des neuronalen Netzwerks ein Resultat liefert, das näher an dem unter den vorgegebenen Randbedingungen objektiv erzielbaren Optimums liegt. Es wird also der Tendenz entgegengewirkt, Energie auf ein nicht erreichbares Ziel zu richten und dafür das Erreichen eines weniger großen, aber prinzipiell noch erreichbaren Ziels zu "opfern".

Weiterhin wird vermieden, dass die Annäherung einer unter Heranziehung des vom neuronalen Netzwerk gelieferten Resultats ermittelten synthetisch generierten Beobachtung an eine reale Beobachtung zu einem Zielkonflikt mit dem eigentlichen Trainingsziel des neuronalen Netzwerks führt. Das neuronale Netzwerk wird darauf trainiert, ein qualitativ möglichst hochwertiges Resultat zu erzielen, das im Kontext der vorgegebenen Anwendung realistisch aussieht. Die Effekte, durch die sich eine real aufgenommene Beobachtung von einer Ideal-Beobachtung unterscheidet, verschlechtern in aller Regel die Qualität. So wirken beispielsweise bei der optischen Beobachtung einer Szenerie mit realen Abbildungssystemen unvermeidliche Abbildungsfehler, wie etwa Verzeichnungen und Aberrationen von Linsen. Die Berücksichtigung dieser Abbildungsfehler lässt sich gemäß dem hier vorgeschlagenen Verfahren in das Messmodell auslagern. Somit muss das zu trainierende neuronale Netzwerk nicht lernen, Beobachtungen mit einer verschlechterten Qualität herzustellen.

Insbesondere wird das Training des neuronalen Netzwerk dadurch von dem konkreten physischen System, mit dem die Referenz-Beobachtungen der Szenerie aufgenommen werden, abstrahiert. Es können daher in ein und demselben Training Trainings-Beispiele, die in unterschiedlicher Weise erfasst wurden, gemischt werden.

Daher umfasst in einer vorteilhaften Ausgestaltung die Menge der Trainings-Beispiele tatsächlich vorgenommene Beobachtungen der Szenerie, die mit mehreren verschiedenen Geräten erfasst wurden, als Referenz-Beobachtungen. Bei der Verarbeitung eines jeden Trainings-Beispiels wird dann ein auf dasjenige Gerät, mit dem die jeweilige tatsächlich vorgenommene Beobachtung erfasst wurde, bezogenes Messmodell gewählt. Das heißt, es wird ermittelt, welche Real-Beobachtung bei der Nutzung gerade dieses Geräts zu erwarten gewesen wäre.

Diese Real-Beobachtung wird mit der tatsächlichen Beobachtung im Trainings-Beispiel, die mit genau diesem Gerät aufgenommen wurde, verglichen.

In einer weiteren besonders vorteilhaften Ausgestaltung beinhaltet mindestens ein Trainings-Beispiel zusätzlich die Angabe einer Beobachtungsrichtung beinhaltet, auf die sich die jeweilige Referenz-Beobachtung bezieht. Diese Angabe der Beobachtungsrichtung wird dem neuronalen Netzwerk gemeinsam mit dem Messort als Eingabe zugeführt. Hiermit kann berücksichtigt werden, dass viele Beobachtungsprozesse in eine bestimmte Richtung zu richten sind und nur einen gemäß dieser Richtung beobachtbaren Teil der Szenerie erfassen können. Insbesondere können ausgehend von ein und demselben Messpunkt die in unterschiedlichen Beobachtungsrichtungen ermittelten Beobachtungen stark voneinander verschieden sein.

In einer weiteren vorteilhaften Ausgestaltung werden zusätzlich auch Parameter, die das Verhalten des Messmodells charakterisieren, auf das Ziel optimiert, bei weiterer Verarbeitung von Trainings-Beispielen die Bewertung durch die Kostenfunktion zu verbessern. Auf diese Weise kann der reale und/oder simulierte Beobachtungsprozess, der bei der Aufnahme der Referenz-Beobachtungen in den Trainings-Beispielen gewirkt hat, anhand der Trainings-Beispiele automatisch gelernt werden und muss nicht manuell modelliert werden. Selbst wenn das für tatsächlich vorgenommene Beobachtungen als Referenz-Beobachtungen verwendete Gerät, wie etwa eine Kamera, prinzipiell bekannt ist, ist eine solche manuelle Modellierung, die auch noch von Geräteeinstellungen abhängen kann, sehr aufwändig.

In einer weiteren besonders vorteilhaften Ausgestaltung umfasst das Messmodell ein neuronales Faltungsnetzwerk, das seine Eingabe durch gleitende Anwendung mindestens eines Filterkerns verarbeitet. Ein solches Messmodell lässt sich besonders effizient gemeinsam mit dem eigentlich zu trainierenden neuronalen Netzwerk trainieren.

In einer weiteren besonders vorteilhaften Ausgestaltung repräsentiert das Messmodell
- einen physikalischen Prozess und/oder Simulationsprozess, der an den Referenz-Beobachtungen der Szenerie mitgewirkt hat, und/oder
- eine Datenauswertung, die auf die Referenz-Beobachtungen der Szenerie geführt hat.

Wie zuvor erläutert, umfasst der physikalische Prozess beispielsweise bei der Aufnahme optischer Bilder als Referenz-Beobachtungen Abbildungsfehler, Rauschen und andere Effekte, die die Bildqualität gegenüber dem auf Grund rein geometrischer Überlegungen zu erwartenden Ideal verschlechtern. Bei der Auswertung von Radar- und Lidar-Daten gibt es eine Notwendigkeit, die Rohdaten in eine Frequenzdarstellung zu überführen, beispielsweise mittels Fourier-Transformation. Diese Verarbeitung kann auf Grund der lediglich endlichen Ausdehnung des Rohsignals auf der Zeitskala zum Auftreten von Komponenten (auch "sidelobes" oder "Nebenkeulen" genannt) in der Frequenzdarstellung führen, die nicht von einem real in der Szenerie vorhandenen Objekt herrühren.

Beide Arten von Effekten können bei der Aufnahme tatsächlicher Beobachtungen als Referenz-Beobachtungen jeweils unausweichlich sein.

In einer weiteren besonders vorteilhaften Ausgestaltung werden Referenz-Beobachtungen gewählt, die von Messungen der Reflexion einer von dem Messort in die Szenerie gesendeten elektromagnetischen oder akustischen Abfragestrahlung herrühren. Diese Abfragestrahlung kann insbesondere Radar-Strahlung, Lidar-Strahlung oder Ultraschall umfassen. Während optische Abbildungssysteme häufig schon so gut sind, dass Unterschiede zu idealen Beobachtungen in der jeweiligen praktischen Anwendung kaum ins Gewicht fallen, gibt es bei Radar- und Lidar-Messungen eigentlich immer deutliche Unterschiede zwischen realen und idealen Beobachtungen, wie etwa die erwähnten "sidelobes". Dies gilt im Besonderen für Radar-Messungen, bei denen anders als bei Lidar-Messungen keine dichte und genaue Punktwolke, sondern lediglich ein Spektrum gemessen wird.

Bei Anwendungen, in denen die Referenz-Beobachtungen von der Reflexion einer Abfragestrahlung herrühren, können insbesondere ein Reflexionskoeffizient, und/oder ein Transmissionskoeffizient, mindestens eines Orts in der Szenerie als Kenngröße der Szenerie gewählt werden. Aus räumlichen Verteilungen dieser Kenngrößen kann durch geometrische Konstruktion eine Ideal-Beobachtung erstellt werden, die bei der Abfrage der Szenerie mit einer Abfragestrahlung zu erwarten ist. Hierfür gibt es eine sehr einsichtige Rendering-Formel, in der Zugewinne und Verluste an Intensität in dB addiert bzw. subtrahiert werden können.

Die Ideal-Beobachtung, und/oder die Real-Beobachtung, kann insbesondere beispielsweise einen Intensitätswert der Reflexion als Funktion einer Entfernung und Richtung des Orts der Reflexion zum Messort umfassen. Dies sind die Datenarten, die von vielen Radar- bzw. Lidar-Sensoren geliefert werden.

In einer weiteren besonders vorteilhaften Ausgestaltung ist die Real-Beobachtung im Vergleich zur Ideal-Beobachtung um Intensitätsbeiträge für zusätzliche Kombinationen aus Entfernung und Richtung angereichert, die zu keinem realen Objekt in der Szenerie korrespondieren. Wie zuvor erläutert, kann es insbesondere durch die Auswertung der Rohsignale mittels Fourier-Transformation zur Ausbildung derartiger "sidelobes" kommen. Es wäre in besonderem Maße widersprüchlich, wenn das zu trainierende neuronale Netzwerk darauf trainiert werden müsste, Signale von gar nicht vorhandenen Objekten zu erzeugen. Somit ist es wesentlich einsichtiger, gemäß dem hier vorgeschlagenen Verfahren die Erzeugung von Ideal-Beobachtungen aus Kenngrößen der Szenerie einerseits, und die weitere Verarbeitung der Ideal-Beobachtungen zu Real-Beobachtungen andererseits, zu trennen.

In einer weiteren besonders vorteilhaften Ausgestaltung wird dem trainierten neuronalen Netzwerk mindestens ein Ort zugeführt. Optional kann dem trainierten neuronalen Netzwerk zusätzlich eine Beobachtungsrichtung zugeführt werden. Das neuronale Netzwerk liefert dann Kenngrößen der Szenerie, so wie sie von dem vorgegebenen Ort aus, und optional in der vorgegebenen Beobachtungsrichtung, zu beobachten sind. Unter Heranziehung dieser vom trainierten neuronalen Netzwerk gelieferten Kenngröße, und/oder einer hieraus erzeugen Ideal-Beobachtung und/oder Real-Beobachtung, wird eine synthetische Beobachtung der Szenerie erzeugt. Diese synthetische Beobachtung kann insbesondere beispielsweise der erzeugten Ideal-Beobachtung und/oder Real-Beobachtung entsprechen. Die synthetisch generierte Beobachtung kann insbesondere beispielsweise als ein neues Trainings-Beispiel für ein weiteres Machine Learning-Modell, oder auch zum Test einer beliebigen Verarbeitungskette für die weitere Verarbeitung der durch einen oder mehrere Sensoren gelieferten Beobachtungen, dienen. Beispielsweise kann eine eingangs erwähnte Verarbeitungskette für die Verarbeitung der Beobachtungen zu Aktionen, die ein Fahrzeug oder Roboter anschließend ausführen soll, "Ende-zu-Ende" geprüft werden. Derartige Prüfungen sind insbesondere wichtig für die Erteilung von Zulassungen zum Betrieb im öffentlichen Straßenverkehr.

Daher wird in einer weiteren besonderen vorteilhaften Ausgestaltung ein weiteres Machine Learning-Modell unter Heranziehung der erzeugten synthetischen Beobachtung der Szenerie trainiert, und/oder es wird die Funktionsfähigkeit eines technischen Systems für die Auswertung von Beobachtungen unter Heranziehung der erzeugten synthetischen Beobachtung der Szenerie geprüft.

Besonders vorteilhaft wird eine Verkehrssituation als Szenerie gewählt. Die synthetisch erzeugte Beobachtung bezieht sich auf eine Abwandlung der Verkehrssituation, die einen Verstoß gegen Verkehrsregeln, und/oder eine Gefährdung, darstellt. Es ist ein besonders großer Aufwand, derartige Abwandlungen zur Gewinnung tatsächlich vorgenommener Beobachtungen als Referenz-Beobachtungen in der Realität nachzustellen, wenn dies denn überhaupt möglich ist. Beispielweise kann sich die Abwandlung darauf beziehen, dass ein Fahrzeug auf der Fahrstreifenbegrenzung zwischen zwei Fahrstreifen fährt oder zu dicht auf ein vorausfahrendes Fahrzeug auffährt.

In einer weiteren besonders vorteilhaften Ausgestaltung wird mindestens ein lokaler Wert mindestens einer ortsabhängigen Funktion, die einzeln oder gemeinsam mit anderen ortsabhängigen Funktionen eine Repräsentation der Szenerie bildet, als Kenngröße gewählt. Damit wird das zu trainierende neuronale Netzwerk in die Lage versetzt, eine bildhafte Rekonstruktion der Szenerie aus beliebigen Perspektiven zu errechnen. Beiträge von Wahrscheinlichkeitsdichtefunktionen zu einer derartigen Repräsentation haben für sich genommen eine Bedeutung, die beispielsweise besonders gut von einem nachgeschalteten, auf eine bestimmte Aufgabe (Task) trainierten neuronalen Netzwerk (Task-Netzwerk) weiter ausgewertet werden kann.

Ein Beispiel für eine derartige Verteilungsfunktion ist eine Wahrscheinlichkeitsdichtefunktion einer Gauß-Verteilung, auch oft kurz als "Gauß-Funktion" bezeichnet. Eine derartige Funktion kann beispielsweise durch
- drei Parameter für die räumliche Verschiebung in den drei Koordinatenrichtungen des kartesischen Raums,
- drei Parameter für die Skalierung in diesen drei Koordinatenrichtungen,
- vier Parameter für die Orientierung der Funktion im Raum,
- drei Parameter für die Angabe der Farbe, mit der sich der Beitrag der Funktion in der Superposition auswirkt, in den drei additiven Grundfarben Rot, Grün und Blau, und
- optional zusätzlich Geschwindigkeitsvektoren für eine Translation und/oder Rotation
charakterisiert werden. All diese Parameter stehen in den Argumenten von Sinus, Kosinus bzw. Exponentialfunktion. Somit ist die Gauß-Funktion problemlos nach diesen Parametern differenzierbar.

Somit wird besonders vorteilhaft mindestens eine Wahrscheinlichkeitsdichtefunktion einer Gauß-Verteilung als ortsabhängige Funktion gewählt.

Das Verfahren kann insbesondere ganz oder teilweise computerimplementiert sein. Daher bezieht sich die Erfindung auch auf ein Computerprogramm mit maschinenlesbaren Anweisungen, die, wenn sie auf einem oder mehreren Computern und/oder Compute-Instanzen ausgeführt werden, den oder die Computer und/oder Compute-Instanzen dazu veranlassen, das beschriebene Verfahren auszuführen. In diesem Sinne sind auch Steuergeräte für Fahrzeuge und Embedded-Systeme für technische Geräte, die ebenfalls in der Lage sind, maschinenlesbare Anweisungen auszuführen, als Computer anzusehen. Compute-Instanzen können beispielsweise virtuelle Maschinen, Container oder serverlose Ausführungsumgebungen sein, die insbesondere in einer Cloud bereitgestellt werden können.

Ebenso bezieht sich die Erfindung auch auf einen maschinenlesbaren Datenträger und/oder auf ein Downloadprodukt mit dem Computerprogramm. Ein Downloadprodukt ist ein über ein Datennetzwerk übertragbares, d.h. von einem Benutzer des Datennetzwerks downloadbares, digitales Produkt, das beispielsweise in einem Online-Shop zum sofortigen Download feilgeboten werden kann.

Weiterhin können ein oder mehrere Computer und/oder Compute-Instanzen mit dem Computerprogramm, mit dem maschinenlesbaren Datenträger bzw. mit dem Downloadprodukt ausgerüstet sein.

Weitere, die Erfindung verbessernde Maßnahmen werden nachstehend gemeinsam mit der Beschreibung der bevorzugten Ausführungsbeispiele der Erfindung anhand von Figuren näher dargestellt.

### Ausführungsbeispiele

Es zeigt:
Figur 1 Ausführungsbeispiel des Verfahrens 100 zum Trainieren eines neuronalen Netzwerks 2;
Figur 2 Simulierte Radar-Spektren, die als Referenz-Beobachtungen 4a verwendet werden können;
Figur 3 Veranschaulichung der Erzeugung einer Ideal-Beobachtung 4a* mit einem Rendering-Modell 7;
Figur 4 Veranschaulichung der Nutzung eines Messmodells 8 zur Erzeugung einer Real-Beobachtung 4a**.

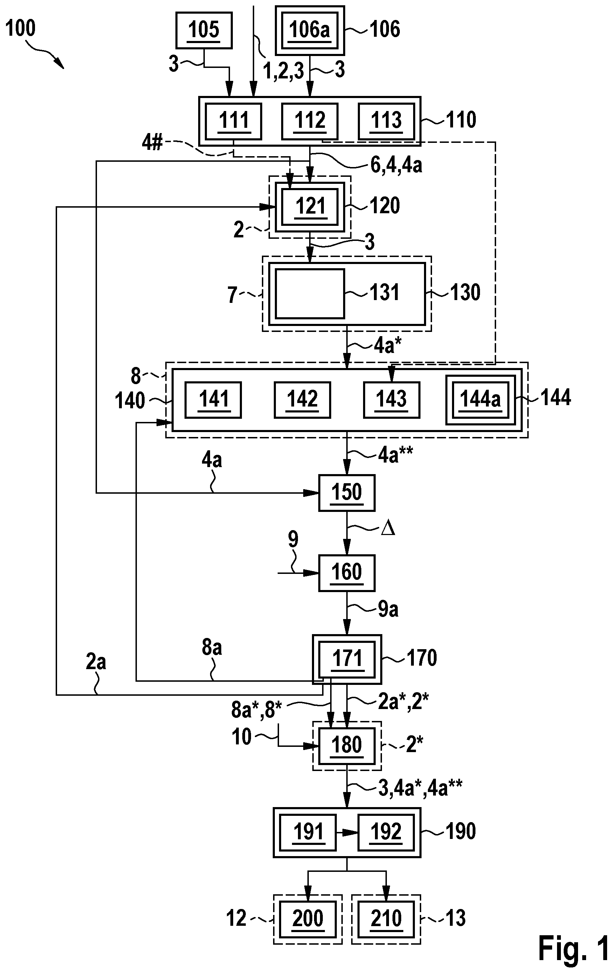

Figur 1 ist ein schematisches Ablaufdiagramm eines Ausführungsbeispiels des Verfahrens 100 zum Trainieren eines neuronalen Netzwerks 2. Dieses neuronale Netzwerk 2 ist dazu ausgebildet, eine oder mehrere Kenngrößen 3 einer vorgegebenen Szenerie 1, die sich auf von einem vorgegebenen Messort 4 beobachtbare Orte 5 beziehen, vorherzusagen.

Gemäß Block 105 kann ein Reflexionskoeffizient, und/oder ein Transmissionskoeffizient, mindestens eines Orts in der Szenerie 1 als Kenngröße 3 der Szenerie 1 gewählt werden.

Gemäß Block 106 kann mindestens ein lokaler Wert mindestens einer ortsabhängigen Funktion, die einzeln oder gemeinsam mit anderen ortsabhängigen Funktionen eine Repräsentation der Szenerie 1 bildet, als Kenngröße 3 gewählt werden. Es kann dann beispielsweise gemäß Block 106a mindestens eine Wahrscheinlichkeitsdichtefunktion einer Gauß-Verteilung als ortsabhängige Funktion gewählt werden.

In Schritt 110 wird es wird eine Menge von Trainings-Beispielen 6 bereitgestellt. Die Trainings-Beispiele 6 enthalten jeweils mindestens Kombinationen aus Messorten 4 einerseits und Referenz-Beobachtungen 4a der Szenerie 1, die sich auf diese Messorte 4 beziehen, andererseits.

Gemäß Block 111 kann mindestens ein Trainings-Beispiel zusätzlich die Angabe einer Beobachtungsrichtung 4# beinhalten, auf die die jeweilige Referenz-Beobachtung 4a bezieht.

Gemäß Block 112 kann die Menge der Trainings-Beispiele 6 tatsächlich vorgenommene Beobachtungen der Szenerie 1, die mit mehreren verschiedenen Geräten erfasst wurden, als Referenz-Beobachtungen 4a umfassen.

Gemäß Block 113 können Referenz-Beobachtungen 4a gewählt werden, die von Messungen der Reflexion einer von dem Messort 4 in die Szenerie 1 gesendeten elektromagnetischen oder akustischen Abfragestrahlung herrühren.

In Schritt 120 wird für jedes Trainings-Beispiel 6 der jeweilige Messort 4 dem neuronalen Netzwerk 2 zugeführt. Daraufhin liefert das neuronale Netzwerk 2 eine Vorhersage für die eine oder mehreren Kenngrößen 3.

Insofern gemäß Block 111 eine Beobachtungsrichtung verfügbar ist, kann diese Angabe der Beobachtungsrichtung 4# gemäß Block 121 dem neuronalen Netzwerk 2 gemeinsam mit dem Messort 4 als Eingabe zugeführt werden.

In Schritt 130 werden die vom neuronalen Netzwerk 2 erhaltenen Kenngrößen 3 mit einem vorgegebenen Rendering-Modell 7 in eine unter idealisierten Bedingungen ausgehend vom jeweiligen Messort 4 zu erwartende Ideal-Beobachtung 4a* der Szenerie 1 übersetzt.

Gemäß Block 131 kann die Ideal-Beobachtung 4a*einen Intensitätswert der Reflexion als Funktion einer Entfernung und Richtung des Orts der Reflexion zum Messort 4 umfassen.

In Schritt 140 wird die Ideal-Beobachtung 4a* mit einem Messmodell 8 in eine unter realistischen Bedingungen ausgehend vom jeweiligen Messort 4 zu erwartende Real-Beobachtung 4a** der Szenerie 1 übersetzt. Dabei repräsentiert das Messmodell 8 einen Prozess, mit dem die Referenz-Beobachtungen 4a in den Trainings-Beispielen 6 erhalten wurden.

Gemäß Block 141 kann das Messmodell 8 ein neuronales Faltungsnetzwerk, das seine Eingabe durch gleitende Anwendung mindestens eines Filterkerns verarbeitet, umfassen.

Gemäß Block 142 kann das Messmodell 8
- einen physikalischen Prozess und/oder Simulationsprozess, der an den Referenz-Beobachtungen 4a der Szenerie 1 mitgewirkt hat, und/oder
- eine Datenauswertung, die auf die Referenz-Beobachtungen 4a der Szenerie 1 geführt hat,
repräsentieren.

Insoweit gemäß Block 112 Referenz-Beobachtungen 4a mit verschiedenen Geräten erfasst wurden, kann gemäß Block 143 bei der Verarbeitung eines jeden Trainings-Beispiels 6 ein auf dasjenige Gerät, mit dem die jeweilige tatsächlich vorgenommene Beobachtung 4a erfasst wurde, bezogenes Messmodell 8 gewählt werden.

Gemäß Block 144 kann die Real-Beobachtung 4a**, einen Intensitätswert der Reflexion als Funktion einer Entfernung und Richtung des Orts der Reflexion zum Messort 4 umfassen. Diese Real-Beobachtung kann gemäß Block 144a im Vergleich zur Ideal-Beobachtung 4a* um Intensitätsbeiträge für zusätzliche Kombinationen aus Entfernung und Richtung angereichert sein, die zu keinem realen Objekt in der Szenerie 1 korrespondieren.

In Schritt 150 werden die Real-Beobachtungen 4a** mit den Referenz-Beobachtungen 4a für das jeweilige Trainings-Beispiel 6 verglichen. Dieser Vergleich liefert eine Abweichung Δ.

In Schritt 160 wird diese Abweichung Δ mit einer vorgegebenen Kostenfunktion 9 bewertet. Es entsteht eine Bewertung 9a.

In Schritt 170 werden Parameter 2a, die das Verhalten des neuronalen Netzwerks 2 charakterisieren, auf das Ziel optimiert, bei weiterer Verarbeitung von Trainings-Beispielen 6 die Bewertung 9a durch die Kostenfunktion 9 zu verbessern. Der fertig optimierte Zustand der Parameter 2a ist mit dem Bezugszeichen 2a* bezeichnet und legt den fertig trainierten Zustand 2* des neuronalen Netzwerks 2 fest.

Gemäß Block 171 können zusätzlich auch Parameter 8a, die das Verhalten des Messmodells 8 charakterisieren, auf das Ziel optimiert werden, bei weiterer Verarbeitung von Trainings-Beispielen 6 die Bewertung 9a durch die Kostenfunktion 9 zu verbessern. Der fertig optimierte Zustand der Parameter 8a ist mit dem Bezugszeichen 8a* bezeichnet und legt den fertig trainierten Zustand 8* des Messmodells 8 fest.

In dem in Figur 1 gezeigten Beispiel wird dem trainierten neuronalen Netzwerk 2 mindestens ein Ort 10 zugeführt. Es wird dann in Schritt 190 unter Heranziehung der daraufhin vom trainierten neuronalen Netzwerk 2 gelieferten Kenngröße 3, und/oder einer hieraus erzeugen Ideal-Beobachtung 4a* und/oder Real-Beobachtung 4a**, eine synthetische Beobachtung 11 der Szenerie 1 erzeugt.

Gemäß Block 191 kann insbesondere beispielsweise eine Verkehrssituation als Szenerie 1 gewählt werden. Gemäß Block 192 kann die synthetische Beobachtung 11 sich dann insbesondere beispielsweise auf eine Abwandlung der Verkehrssituation beziehen, die einen Verstoß gegen Verkehrsregeln, und/oder eine Gefährdung, darstellt.

In dem in Figur 1 gezeigten Beispiel wird in Schritt 200 ein weiteres Machine Learning-Modell 12 unter Heranziehung der erzeugten synthetischen Beobachtung 11 der Szenerie 1 trainiert. Dieses weitere Machine Learning-Modell kann zur Lösung einer beliebigen Aufgabe (Task) eingerichtet sein, wie beispielsweise eine Erkennung und/oder Klassifikation von Objektinstanzen in der Szenerie 1, oder auch eine semantische Segmentierung der Szenerie 1.

Alternativ oder auch in Kombination hierzu kann in Schritt 210 die Funktionsfähigkeit eines technischen Systems 13 für die Auswertung von Beobachtungen unter Heranziehung der erzeugten synthetischen Beobachtung 11 der Szenerie 1 geprüft werden.

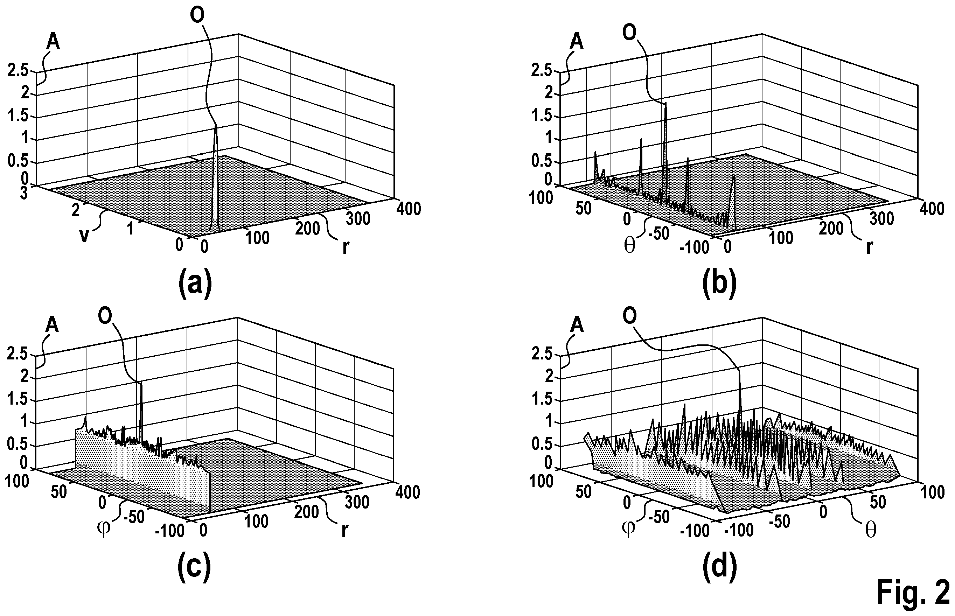

Figur 2 zeigt simulierte Radar-Spektren, die für eine beispielhafte Szenerie 1 mit nur einem einzigen Objekt erhalten wurden. Diese Radar-Spektren bilden einen sogenannten "Radar-Würfel", der ein vierdimensionaler Tensor mit den Dimensionen Entfernung r, Doppler-Geschwindigkeit v, Azimut-Winkel θ und Elevations-Winkel φ ist. Jeder Wert in diesem Würfel (Tensor) repräsentiert eine Amplitude A des Radar-Signals, das für die entsprechende Position gemessen wurde. In den Plots in Figur 2 sind zur Veranschaulichung jeweils nur zwei Dimensionen gezeigt, und es wurden bezüglich der beiden jeweils übrigen Dimensionen des 4D-Tensors die maximalen Amplitudenwerte gewählt. Der Anteil des Signals, der sich auf das einzige Objekt in der Szenerie 1 bezieht, ist jeweils mit dem Bezugszeichen O markiert. Die Radar-Spektren können im Kontext des Verfahrens 100 als Referenz-Beobachtungen 4a verwendet werden.

In Figur 2a ist die Amplitude A als Funktion der Doppler-Geschwindigkeit v und der Entfernung r aufgetragen.

In Figur 2b ist die Amplitude A als Funktion des Azimut-Winkels θ und der Entfernung r aufgetragen. Hier ist besonders deutlich sichtbar, dass es zusätzlich zu demjenigen Peak, der sich auf das einzige Objekt in der Szenerie 1 bezieht, noch weitere Peaks gibt. Diese Peaks, die auch "sidelobes" genannt werden und zu keinem realen Objekt in der Szenerie 1 korrespondieren, sind durch die Fourier-Transformation (FFT) des zeitabhängigen Radar-Signals in die Darstellung in Figur 2b entstanden. Aus Figur 2b ist ersichtlich, dass eine Reflexion bei einer bestimmten Entfernung r die Amplitudenwerte für Kombinationen dieser Entfernung r mit allen Azimut-Winkeln θ beeinflusst.

Ein ähnlicher Effekt ist in Figur 2c zu sehen, wo die Amplitude A als Funktion des Elevations-Winkels φ und der Entfernung r aufgetragen ist.

In Figur 2d ist die Amplitude A als Funktion des Elevations-Winkels φ und des Azimut-Winkels θ aufgetragen.

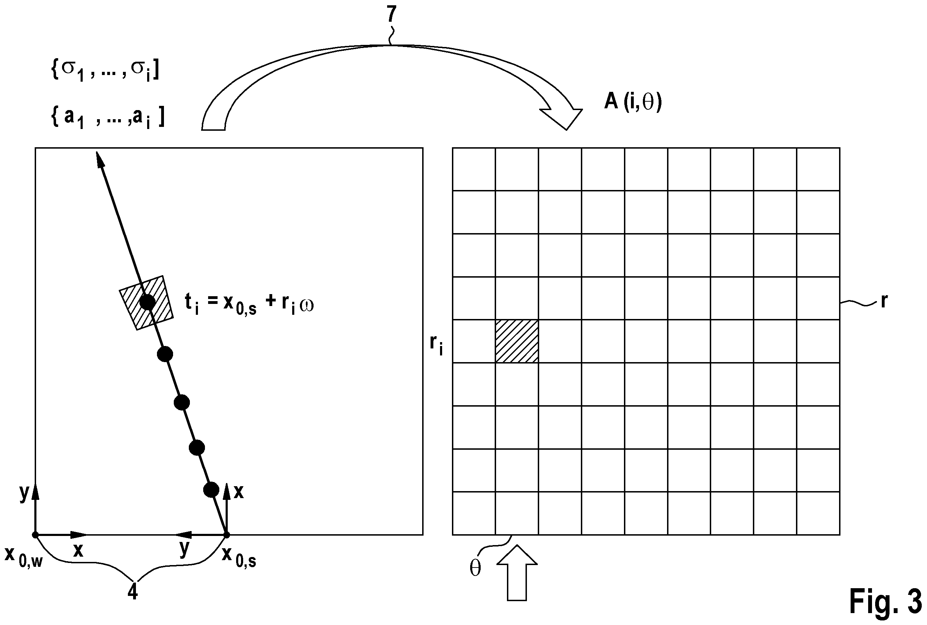

Figur 3 veranschaulicht, wie aus einer räumlichen Verteilung von Transmissionskoeffizienten *α*(*x, y, z*) und Reflexionskoeffizienten *σ*(*x, y, z*) als Funktion kartesischer Koordinaten *x, y, z* im Raum die Amplitude A eines Radar-Signals als Funktion des Azimut-Winkels θ und der Entfernung r ermittelt werden kann. Die so ermittelte Amplitude A ist eine Ideal-Beobachtung 4a*, die ausgehend von einem Messort 4 in der Strahlrichtung ω zu erwarten ist.

Die vollständige Auftragung der Amplitude A über Azimut-Winkels θ und Entfernung r kann erhalten werden, indem Strahlen für alle Kombinationen von Azimut-Winkel θ und Elevations-Winkel φ betrachtet und Samples entlang verschiedener Positionen entlang jedes Strahls gezogen werden. Wenn die Entfernung *r* in Bins *rᵢ* mit Indizes *i* diskretisiert ist, lässt sich die Amplitude A als Funktion dieser Indizes *i* und des Azimut-Winkels θ schreiben: $A \left(i, θ\right) = {g}_{θ} \frac{σ \left({x}_{0 , S}+{r}_{i}ω\right)}{{r}_{i}^{2}} {\prod }_{i ′ = 1}^{i - 1} α {\left({t}_{i ′}\right)}^{2}$ mit ${t}_{i} = {x}_{0 , S} + {r}_{i} ω ,$ wobei *x*_{0,*S*} der Messort 4 im Koordinatensystem des verwendeten Radar-Sensors ist. Dieses Vorgehen einschließlich der Rendering-Formel für *A*(*i, θ*) bilden im Kontext des Verfahrens 100 ein Rendering-Modell 7.

Figur 3 ist der Einfachheit halber zweidimensional gezeichnet, also ohne den Elevations-Winkel. Dementsprechend hängt auch die Amplitude A nur von *i* und *θ* ab. Im dreidimensionalen Raum wären *x* und ω dreidimensional, und der Antennengewinn *g_{θ}* wäre sowohl vom Azimut-Winkel θ als auch vom Elevations-Winkel φ abhängig. Die Amplitude *A* wäre dann ebenfalls von beiden Winkeln abhängig, also *A*(*i, θ,* φ)*.*

In Figur 3 sind auf Grund der Diskretisierung der Entfernung *r* in Bins *rᵢ* auch die Reflexionskoeffizienten *σ* und die Transmissionskoeffizienten *α* mit Indizes 1, ...,*i* bezeichnet. *x*_{0,*W*} bezeichnet den Messort 4 in Weltkoordinaten *x, y, z. x*_{0,*S*} bezeichnet den Messort 4 im Koordinatensystem des verwendeten Radar-Sensors. Die gesampelten Orte entlang des Radar-Strahls repräsentieren von dem Messort 4 aus beobachtbare Orte 5 in der Szenerie 1.

Wenn also das trainierte neuronale Netzwerk 2 für jeden Ort *x, y, z* im Raum einen Transmissionskoeffizienten *α*(*x, y, z)* und einen Reflexionskoeffizienten *σ*(*x, y, z*) als lokale Kenngrößen 3 der Szenerie 1 liefert, dann kann hieraus eine Ideal-Beobachtung 4a* ermittelt werden, die prinzipiell mit den Referenz-Beobachtungen 4a verglichen werden könnten. Das neuronale Netzwerk 2 könnte auf das Ziel trainiert werden, dass die Ideal-Beobachtungen 4a* möglichst gut mit den Referenz-Beobachtungen 4a übereinstimmen. Wie zuvor erläutert, würde bei diesem Vergleich jedoch stören, dass das geometrische Rendering-Modell die Erzeugung von "sidelobes" durch die Fourier-Transformation (FFT) nicht enthält, da im Rahmen des Rendering-Modells kein zeitabhängiges Signal zu transformieren ist. Es stünde im Widerspruch zum eigentlichen Trainingsziel des neuronalen Netzwerks 2, wenn es jetzt zusätzlich lernen müsste, Peaks für Objekte zu erzeugen, die in Wahrheit gar nicht in der Szenerie 1 vorhanden sind.

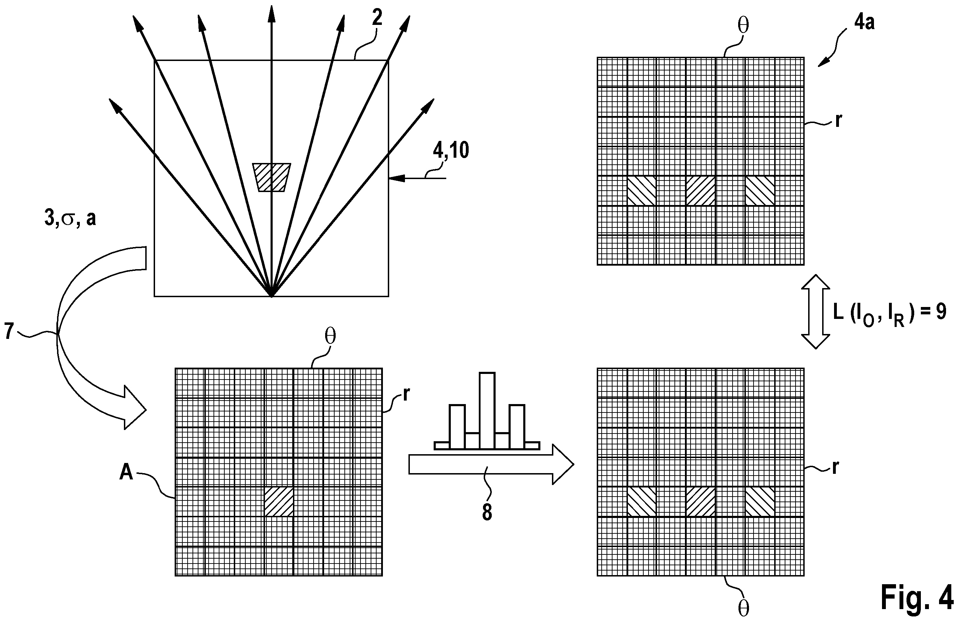

Figur 4 veranschaulicht, wie mit dem Verfahren 100 dieser Widerspruch aufgelöst wird. Wenn dem trainierten neuronalen Netzwerk 2 ein Messort 4 oder sonstiger Ort 10 zugeführt wird, liefert das neuronale Netzwerk lokale Reflexionskoeffizienten *σ* und lokale Transmissionskoeffizienten *α* als Kenngrößen 3 der Szenerie 1. Das Rendering-Modell 7 liefert Radar-Amplituden A in Abhängigkeit der Entfernung *r* vom Messort 4 und dem Azimut-Winkel *θ* als Ideal-Beobachtung 4*. Die mit dem Rendering-Modell 7 erhaltene Ideal-Beobachtung 4* wird durch ein weiteres Messmodell 8 in eine Real-Beobachtung 4** umgewandelt. Dieses Messmodell 8 modelliert die bei realen Beobachtungen unvermeidlich auftretenden zusätzlichen Effekte, hier: die Erzeugung von "sidelobes" durch die Fourier-Transformation (FFT). Die Real-Beobachtung 4** ist also diejenige Beobachtung, die realistischerweise bei Messungen zu erwarten ist. Die Real-Beobachtung 4** kann mit der Referenz-Beobachtung 4a, etwa den in Figur 2 gezeigten Radar-Spektren (hier als zweidimensionaler Plot dargestellt), verglichen werden. Das Ergebnis des Vergleichs kann mit einer Loss-Funktion 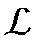 (*I*₀, *I_{R}*) als Kostenfunktion 9 bewertet werden. Hier repräsentiert *I*₀ die Übereinstimmung zwischen der Real-Beobachtung 4** und der Referenz-Beobachtung 4a, und *I_{R}* repräsentiert die besagte Regularisierung. Dass die letztendlich aus den vom neuronalen Netzwerk 2 gelieferten Kenngrößen 3 ermittelte Real-Beobachtung 4** in Einklang mit der Referenz-Beobachtung 4a kommt, ist ein realistisches Optimierungsziel für die Parameter 2a des neuronalen Netzwerks 2.

Die für diese Optimierung verwendete Kostenfunktion (Loss-Funktion) 9 kann insbesondere beispielsweise neben der Abweichung Δ zwischen der Real-Beobachtung 4** und der Referenz-Beobachtung 4a noch einen Regularisierungs-Term umfassen. Die Abweichung Δ kann insbesondere beispielsweise mit einem L1-Loss oder einem L2-Loss bewertet werden. Der Regularisierungs-Term kann insbesondere beispielsweise einen L1-Loss zwischen der erzeugten Real-Beobachtung 4** und einem Null-Tensor umfassen. Mit diesem Regularisierungs-Term wird das neuronale Netzwerk 2 dazu optimiert, nur dann einen von Null verschiedenen Reflexionskoeffizienten vorherzusagen, wenn dieser wirklich benötigt wird.

Speziell im Anwendungsfall von Radar- und Lidar-Daten kann Rechenaufwand eingespart werden, indem bei der Erzeugung der Ideal-Beobachtung 4* nicht alle möglichen Radar-Strahlen betrachtet werden, sondern nur ein bestimmter Anteil der Strahlen, entlang derer die höchsten Amplituden auftreten. Die Strahlen können also beispielsweise nach den höchsten Amplituden sortiert werden, die entlang des jeweiligen Strahls auftreten, und es können dann beispielsweise die Top-20 % der in dieser Rangfolge sortierten Strahlen genutzt werden. Hierhinter steckt die Überlegung, dass der meiste Raum in dem zuvor erläuterten "Radar-Würfel" mit niedrigen Amplituden ausgefüllt ist. Es kann auch beispielsweise zunächst nur mit den Top-1 % der Strahlen begonnen werden, um die Peaks in den Daten zu lernen, und es können dann im Rahmen einer Annealing-Strategie während des Trainings des neuronalen Netzwerks Ideal-Beobachtungen 4* verwendet werden, die einen sukzessive erhöhten Anteil der Strahlen nutzen. Sofern der verfügbare Speicher keine Beschränkung darstellt, können am Ende alle Strahlen genutzt werden.

Die Nutzung nur der Top-n % der Strahlen führt dazu, dass bei der Optimierung Anteile der Szenerie mit hohen Amplituden in den Radar-Daten bevorzugt werden. Dies könnte tendenziell dazu führen, dass das neuronale Netzwerk auch in objektfreien Bereichen der Szenerie 1, die im Training untergewichtet sind, Kenngrößen 3 vorhersagt, die auf hohe Amplituden führen. Um dieser Tendenz entgegenzuwirken, können zusätzlich zu den Top-n % der Strahlen auch noch zufällig ausgewählte Strahlen aus dem restlichen (nicht-Top n %) Anteil zum Ermitteln der Ideal-Beobachtung 4* herangezogen werden. In dem besagten Regularisierungs-Term kann optional diesen zufällig ausgewählten Strahlen ein größeres Gewicht eingeräumt werden.

## Patentansprüche

1. Verfahren (100) zum Trainieren eines neuronalen Netzwerks (2), das eine oder mehrere Kenngrößen (3) einer vorgegebenen Szenerie (1) vorhersagt, die sich auf von einem vorgegebenen Messort (4) beobachtbare Orte (5) beziehen, mit den Schritten:
• es wird eine Menge von Trainings-Beispielen (6) bereitgestellt (110), die jeweils mindestens Kombinationen aus Messorten (4) einerseits und Referenz-Beobachtungen (4a) der Szenerie (1), die sich auf diese Messorte (4) beziehen, andererseits enthalten;
• für jedes Trainings-Beispiel (6) wird der jeweilige Messort (4) dem neuronalen Netzwerk (2) zugeführt (120), so dass das neuronale Netzwerk (2) eine Vorhersage für die eine oder mehreren Kenngrößen (3) liefert;
• die so erhaltenen Kenngrößen (3) werden mit einem vorgegebenen Rendering-Modell (7) in eine unter idealisierten Bedingungen ausgehend vom jeweiligen Messort (4) zu erwartende Ideal-Beobachtung (4a*) der Szenerie (1) übersetzt (130);
• die Ideal-Beobachtung (4a*) wird mit einem Messmodell (8) in eine unter realistischen Bedingungen ausgehend vom jeweiligen Messort (4) zu erwartende Real-Beobachtung (4a**) der Szenerie (1) übersetzt (140), wobei das Messmodell (8) einen Prozess repräsentiert, mit dem die Referenz-Beobachtungen (4a) in den Trainings-Beispielen (6) erhalten wurden;
• die Real-Beobachtungen (4a**) werden mit den Referenz-Beobachtungen (4a) für das jeweilige Trainings-Beispiel (6) verglichen (150);
• eine bei diesem Vergleich festgestellte Abweichung (Δ) wird mit einer vorgegebenen Kostenfunktion (9) bewertet (160); und
• Parameter (2a), die das Verhalten des neuronalen Netzwerks (2) charakterisieren, werden auf das Ziel optimiert (170), bei weiterer Verarbeitung von Trainings-Beispielen (6) die Bewertung (9a) durch die Kostenfunktion (9) zu verbessern.

2. Verfahren (100) nach Anspruch 1, wobei
• mindestens ein Trainings-Beispiel zusätzlich die Angabe einer Beobachtungsrichtung (4#) beinhaltet (111), auf die sich die jeweilige Referenz-Beobachtung (4a) bezieht, und
• diese Angabe der Beobachtungsrichtung (4#) dem neuronalen Netzwerk (2) gemeinsam mit dem Messort (4) als Eingabe zugeführt wird (121).

3. Verfahren (100) nach einem der Ansprüche 1 bis 2, wobei zusätzlich auch Parameter (8a) , die das Verhalten des Messmodells (8) charakterisieren, auf das Ziel optimiert werden (171), bei weiterer Verarbeitung von Trainings-Beispielen (6) die Bewertung (9a) durch die Kostenfunktion (9) zu verbessern.

4. Verfahren (100) nach einem der Ansprüche 1 bis 3, wobei das Messmodell (8) ein neuronales Faltungsnetzwerk, das seine Eingabe durch gleitende Anwendung mindestens eines Filterkerns verarbeitet, umfasst (141).

5. Verfahren (100) nach einem der Ansprüche 1 bis 4, wobei das Messmodell (8)
• einen physikalischen Prozess und/oder Simulationsprozess, der an den Referenz-Beobachtungen (4a) der Szenerie (1) mitgewirkt hat, und/oder
• eine Datenauswertung, die auf die Referenz-Beobachtungen (4a) der Szenerie (1) geführt hat,
repräsentiert (142).

6. Verfahren (100) nach einem der Ansprüche 1 bis 5, wobei
• die Menge der Trainings-Beispiele (6) tatsächlich vorgenommene Beobachtungen der Szenerie (1), die mit mehreren verschiedenen Geräten erfasst wurden, als Referenz-Beobachtungen (4a) umfasst (112), und
• bei der Verarbeitung eines jeden Trainings-Beispiels (6) ein auf dasjenige Gerät, mit dem die jeweilige tatsächlich vorgenommene Beobachtung (4a) erfasst wurde, bezogenes Messmodell (8) gewählt wird (143).

7. Verfahren (100) nach einem der Ansprüche 1 bis 6, wobei Referenz-Beobachtungen (4a) gewählt werden (113), die von Messungen der Reflexion einer von dem Messort (4) in die Szenerie (1) gesendeten elektromagnetischen oder akustischen Abfragestrahlung herrühren.

8. Verfahren (100) nach Anspruch 7, wobei ein Reflexionskoeffizient, und/oder ein Transmissionskoeffizient, mindestens eines Orts in der Szenerie (1) als Kenngröße (3) der Szenerie (1) gewählt wird (105).

9. Verfahren (100) nach einem der Ansprüche 7 bis 8, wobei die Ideal-Beobachtung (4a*), und/oder die Real-Beobachtung (4a**), einen Intensitätswert der Reflexion als Funktion einer Entfernung und Richtung des Orts der Reflexion zum Messort (4) umfasst (131, 144).

10. Verfahren (100) nach Anspruch 9, wobei die Real-Beobachtung (4a**) im Vergleich zur Ideal-Beobachtung (4a*) um Intensitätsbeiträge für zusätzliche Kombinationen aus Entfernung und Richtung angereichert ist (131a, 144a), die zu keinem realen Objekt in der Szenerie (1) korrespondieren.

11. Verfahren (100) nach einem der Ansprüche 1 bis 10, wobei
• dem trainierten neuronalen Netzwerk (2) mindestens ein Ort (10) zugeführt wird (180); und
• unter Heranziehung der daraufhin vom trainierten neuronalen Netzwerk (2) gelieferten Kenngröße (3), und/oder einer hieraus erzeugen Ideal-Beobachtung (4a*) und/oder Real-Beobachtung (4a**), eine synthetische Beobachtung (11) der Szenerie (1) erzeugt wird (190).

12. Verfahren (100) nach Anspruch 11, wobei
• ein weiteres Machine Learning-Modell (12) unter Heranziehung der erzeugten synthetischen Beobachtung (11) der Szenerie (1) trainiert wird (200); und/oder
• die Funktionsfähigkeit eines technischen Systems (13) für die Auswertung von Beobachtungen unter Heranziehung der erzeugten synthetischen Beobachtung (11) der Szenerie (1) geprüft wird (210).

13. Verfahren (100) nach einem der Ansprüche 11 bis 12, wobei
• eine Verkehrssituation als Szenerie (1) gewählt wird (191) und
• die synthetische Beobachtung (11) sich auf eine Abwandlung der Verkehrssituation bezieht, die einen Verstoß gegen Verkehrsregeln, und/oder eine Gefährdung, darstellt (192).

14. Verfahren (100) nach einem der Ansprüche 1 bis 13, wobei mindestens ein lokaler Wert mindestens einer ortsabhängigen Funktion, die einzeln oder gemeinsam mit anderen ortsabhängigen Funktionen eine Repräsentation der Szenerie (1) bildet, als Kenngröße (3) gewählt wird (106).

15. Verfahren (100) nach Anspruch 14, wobei mindestens eine Wahrscheinlichkeitsdichtefunktion einer Gauß-Verteilung als ortsabhängige Funktion gewählt wird (106a).

16. Computerprogramm, umfassend maschinenlesbare Anweisungen, die, wenn sie auf einem oder mehreren Computern und/oder Compute-Instanzen ausgeführt werden, den oder die Computer und/oder Compute-Instanzen dazu veranlassen, das Verfahren (100) nach einem der Ansprüche 1 bis 15 auszuführen.

17. Maschinenlesbarer Datenträger und/oder Downloadprodukt mit dem Computerprogramm nach Anspruch 16.

18. Ein oder mehrere Computer und/oder Compute-Instanzen mit dem Computerprogramm nach Anspruch 16, und/oder mit dem maschinenlesbaren Datenträger und/oder Downloadprodukt nach Anspruch 17.
